(19) **Europäisches Patentamt / European Patent Office / Office européen des brevets**

(11) **EP 4 353 678 A1**

(12) **EUROPEAN PATENT APPLICATION**
published in accordance with Art. 153(4) EPC

(43) Date of publication:
**17.04.2024 Bulletin 2024/16**

(21) Application number: **21945183.8**

(22) Date of filing: **11.06.2021**

(51) International Patent Classification (IPC):
***C01B 32/25*** (2017.01)

(52) Cooperative Patent Classification (CPC):
**C01B 32/25**

(86) International application number:
**PCT/JP2021/022258**

(87) International publication number:
**WO 2022/259509 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sumitomo Electric Hardmetal Corp.
Itami-shi, Hyogo 664-0016 (JP)**

(72) Inventors:
• **ISHIDA, Yuh**
  **Itami-shi, Hyogo 664-0016 (JP)**
• **MATSUKAWA, Michiko**
  **Itami-shi, Hyogo 664-0016 (JP)**
• **KUKINO, Satoru**
  **Itami-shi, Hyogo 664-0016 (JP)**

(74) Representative: **Boult Wade Tennant LLP
Salisbury Square House
8 Salisbury Square
London EC4Y 8AP (GB)**

(54) **DIAMOND POLYCRYSTAL BODY, AND TOOL PROVIDED WITH DIAMOND POLYCRYSTAL BODY**

(57) A polycrystalline diamond comprising diamond particles, wherein: the content of the diamond particles is more than 99% by volume based on the total volume of the polycrystalline diamond; the median diameter d50 of the diamond particles is 10 nm or more and 200 nm or less; and the dislocation density of the diamond particles is $0.1 \times 10^{15}$ m$^{-2}$ or more and less than $2.0 \times 10^{15}$ m$^{-2}$.

EP 4 353 678 A1

**Description**

TECHNICAL FIELD

The present disclosure relates to a polycrystalline diamond and a tool comprising the polycrystalline diamond.

BACKGROUND ART

Polycrystalline diamond is widely used for tools such as cutting bits, dressers and dies, drilling bits, and the like, because it has an excellent hardness and neither directional hardness or cleavage.

Conventional polycrystalline diamond has been produced by sintering diamond powder as a raw material with a sintering aid or binder material under conditions of a high pressure and a high temperature (generally, a pressure of about 5 to 8 GPa and a temperature of about 1,300 to 2,200°C) under which diamond is thermodynamically stable. The sintering aid to be used has been an iron group element metal such as Fe, Co or Ni, or a carbonate such as $CaCO_3$. The binder material to be used has been a ceramic such as SiC.

The polycrystalline diamond produced by the above method contains a sintering aid or binder material. The sintering aid and binder material may cause deterioration of mechanical properties such as hardness and strength or heat resistance of the polycrystalline diamond.

A polycrystalline diamond obtained by removing a sintering aid from the diamond polycrystal by acid treatment, and a polycrystalline diamond having excellent heat resistance produced by using a heat-resistant SiC as a binder material are also known. However, such a polycrystalline diamond has a low hardness or strength and thereby insufficient mechanical properties as a material for tools.

Such a non-diamond carbon material as graphite, glassy carbon, amorphous carbon and onion-like carbon can be directly converted into diamond under ultra-high pressure and high temperature without sintering aid or the like used. Polycrystalline diamond can be produced by directly converting the non-diamond phase to the diamond phase and simultaneously performing sintering (WO 2005/065809 (PTL 1) and H. Sumiya et al., Japanese Journal of Applied Physics 48 (2009) 120206 (NPL 1)).

CITATION LIST

PATENT LITERATURE

PTL 1: WO 2005/065809

NON PATENT LITERATURE

NPL 1: H. Sumiya et al., Japanese Journal of Applied Physics 48 (2009) 120206

SUMMARY OF INVENTION

A polycrystalline diamond of the present disclosure is a polycrystalline diamond comprising diamond particles, wherein:

the content of the diamond particles is more than 99% by volume based on the total volume of the polycrystalline diamond;
the median diameter d50 of the diamond particles is 10 nm or more and 200 nm or less; and
the dislocation density of the diamond particles is $0.1 \times 10^{15}$ m$^{-2}$ or more and less than $2.0 \times 10^{15}$ m$^{-2}$.

A tool of the present disclosure comprises the polycrystalline diamond described above.

BRIEF DESCRIPTION OF DRAWING

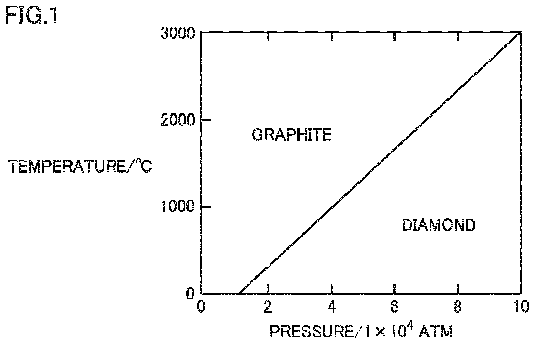

Fig. 1 is a phase equilibrium diagram of carbon.

DETAILED DESCRIPTION

[Problem to be Solved by the Present Disclosure]

In recent years, there has been a need for more efficient cutting (for example, having a higher feed rate), and further improvements in the performance of a polycrystalline diamond (for example, improvement in thermal conductivity, improvement in hardness, or the like) have been expected.

The present disclosure has been made in view of the above circumstances. An object of the present disclosure is to provide a polycrystalline diamond having an excellent thermal conductivity, and a tool comprising the polycrystalline diamond.

[Advantageous Effect of the Present Disclosure]

The present disclosure can provide a polycrystalline diamond having an excellent thermal conductivity, and a tool comprising the polycrystalline diamond.

[Description of Embodiments]

The aspects of the present disclosure are first listed and described.

[1] A polycrystalline diamond according to one aspect of the present disclosure is a polycrystalline diamond comprising diamond particles, wherein:

the content of the diamond particles is more than 99% by volume based on the total volume of the polycrystalline diamond;
the median diameter d50 of the diamond particles is 10 nm or more and 200 nm or less; and
the dislocation density of the diamond particles is $0.1 \times 10^{15}$ m$^{-2}$ or more and less than $2.0 \times 10^{15}$ m$^{-2}$.
The polycrystalline diamond has a low dislocation density of diamond particles, and is thereby improved in thermal conductivity. That is, the polycrystalline diamond has an excellent thermal conductivity.

[2] For the polycrystalline diamond, the dislocation density of the diamond particles is preferably $0.1 \times 10^{15}$ m$^{-2}$ or more and $1.0 \times 10^{15}$ m$^{-2}$ or less. By defining the dislocation density within such a range, the polycrystalline diamond has a superior thermal conductivity.

[3] For the polycrystalline diamond, the median diameter d50 of the diamond particles is preferably 10 nm or more and 100 nm or less. By defining the median diameter d50 within such a range, the polycrystalline diamond has an excellent thermal conductivity as well as an excellent hardness.

[4] The polycrystalline diamond preferably further comprises boron, wherein the content of boron is 0.01% by mass or more and 1% by mass or less based on the total mass of the polycrystalline diamond. By defining the polycrystalline diamond in such a manner, the polycrystalline diamond has slidability and electrical conductivity.

[5] The polycrystalline diamond preferably has a Knoop hardness at a normal temperature of 80 GPa or more. By defining the Knoop hardness of the polycrystalline diamond in such a manner, the polycrystalline diamond has an excellent thermal conductivity as well as an excellent wear resistance.

[6] In the polycrystalline diamond of the present disclosure, the content of at least one metal element selected from the group consisting of a Group 4 element, a Group 5 element and a Group 6 element in the periodic table, and iron, aluminum, silicon, cobalt and nickel is preferably less than 1% by volume. By defining the content of at least one metal element within such a range, the polycrystalline diamond has an excellent hardness.

[7] In the polycrystalline diamond of the present disclosure, the content of at least one inevitable impurity selected from the group consisting of hydrogen, oxygen, nitrogen, an alkali metal element and an alkaline earth metal element is preferably less than 0.1% by volume. By defining the content of at least one inevitable impurity within such a range, the polycrystalline diamond has a superior hardness.

[8] A tool according to one aspect of the present disclosure comprises the polycrystalline diamond described above.

The tool comprises the polycrystalline diamond having an excellent thermal conductivity, and it thereby has an excellent wear resistance during high-speed machining and the like of various materials. As used herein, the term "wear resistance" means a resistance to wear of a tool during material machining.

[Details of Embodiment of the Present Disclosure]

Details of the embodiments of the present disclosure will be described below. However, the present disclosure is not limited to these illustrative examples. As used herein, the expression in the form of "A to Z" means from the upper limit to the lower limit of the range (that is, A or more and Z or less), and when there is no description of the unit for A and the unit is described only for Z, the unit for A is the same as the unit of Z.

<<Polycrystalline Diamond>>

The polycrystalline diamond according to the present embodiment is a polycrystalline diamond comprising diamond particles, wherein:

the content of the diamond particles is more than 99% by volume base on the total volume of the polycrystalline diamond;
the median diameter d50 of the diamond particles is 10 nm or more and 200 nm or less; and
the dislocation density of the diamond particles is $0.1 \times 10^{15}$ m$^{-2}$ or more and less than $2.0 \times 10^{15}$ m$^{-2}$.

The polycrystalline diamond comprises diamond particles. That is, the polycrystalline diamond is basically composed of the diamond particles, and comprises substantially no binder phase (binder) formed by one or both of a sintering aid and a binder material. Therefore, the polycrystalline diamond has a very high hardness and strength. In addition, the polycrystalline diamond does not suffer from deterioration of mechanical properties or shedding of grains due to a difference in coefficient of thermal expansion from that of the binder material or due to the catalytic action of the binder material even under high temperature conditions. In one aspect of the present embodiment, the diamond particles can also be understood as crystalline grains of diamond.

The polycrystalline diamond is a polycrystal composed of a plurality of diamond particles. Therefore, the polycrystalline diamond has neither directional property (anisotropy) and cleavage property exhibited by a monocrystal, and has isotropic hardness and wear resistance in all directions.

The polycrystalline diamond may contain inevitable impurities as long as the effects of the present embodiment are exhibited. Examples of the inevitable impurity include hydrogen, oxygen, nitrogen, and a metal element such as an alkali metal element (such as lithium (Li), sodium (Na) or potassium (K)) or an alkaline earth metal element (such as calcium (Ca) or magnesium (Mg)). That is, in the present embodiment, in the polycrystalline diamond, the content of at least one inevitable impurity selected from the group consisting of hydrogen, oxygen, nitrogen, an alkali metal element and an alkaline earth metal element is preferably less than 0.1% by volume. The lower limit of the content of the inevitable impurities may be, for example, 0% by volume or more. When the inevitable impurities contain two or more elements, the sum of the contents of elements is the content of the inevitable impurities.

The concentrations of hydrogen, oxygen, nitrogen and the like in the polycrystalline diamond can be measured by secondary ion mass spectrometry (SIMS). As an example of this measurement method, the impurity concentration is measured using "CAMECA IMS-7f" (available from Ametech Inc.) as a device, with a primary ion species of Cs$^+$, a primary acceleration voltage of 15.0 kV, and a detection area of $\varphi$ 30 $\mu$m.

The polycrystalline diamond of the present embodiment is a sintered material, but the term "polycrystalline" is used in the present embodiment because the sintered material is usually intended to contain a binder in many cases.

<Diamond Particles>

(Content of Diamond Particles)

In the present embodiment, the content of the diamond particles is more than 99% by volume and preferably more than 99% by volume and 100% by volume or less based on the total volume of the polycrystalline diamond.

The content (% by volume) of the diamond particles in the polycrystalline diamond can be measured by using, in combination with an X-ray diffraction method, and a method using an energy dispersive X-ray analyzer (EDX) (for example, X-MAX80 EDS system available from Oxford Instruments) equipped with a scanning electron microscope (SEM) (for example, "JSM-7800F" (trade name) available from JEOL Ltd.) (hereinafter also referred to as "SEM-EDX"). A specific measurement method is as follows.

First, a polycrystalline diamond is cut at an arbitrary position to prepare a sample including a cross section of the polycrystalline diamond. The cross section can be prepared with a focused ion beam device, a cross-section polisher device or the like. Then, the cross section is observed with an SEM to acquire a backscattered electron image. In the backscattered electron image, regions including diamond particles and non-diamond carbon are black regions, and other regions (for example, regions including elements derived from a binder material) are gray regions or white regions. The magnification at the time of observing the cross section with the SEM is appropriately adjusted so that the number of diamond particles observed in the measurement field of view is 100 or more. For example, the magnification at the time of observing the cross section with the SEM may be 10,000 times.

Next, the backscattered electron image is subjected to binarization processing with an image analysis software ("Win ROOF ver. 7.4.5", "WinROOF2018" or the like available from MITANI CORPORATION). The above image analysis software automatically sets an appropriate binarization threshold based on the image information (a measurer does not arbitrarily set a threshold). The present inventors have confirmed that the measurement results do not vary significantly even when the brightness or the like of the image is varied. The area proportion of pixels derived from the dark field (pixels derived from diamond particles and non-diamond carbon) to the area of the measurement field of view is calculated from the binarized image. By expressing the calculated area proportion in % by volume, the sum (% by volume) of the content of diamond particles and the content of non-diamond carbon can be determined.

The area proportion of pixels derived from the bright field (pixels derived from the other regions than diamond particles and non-diamond carbon) to the area of the measurement field of view can be calculated from the binarized image to determine the content (% by volume) of the other regions.

The present inventors have confirmed that as long as the sum (% by volume) of the content of the diamond particles and the content of the non-diamond carbon in the polycrystalline diamond is measured in the same sample, little variation is observed in the measurement results even if the selected measurement field of view is changed and calculations are performed multiple times. Accordingly, the inventors have believed that even if the measurement field of view is set arbitrarily, it is not arbitrary.

It can be confirmed, by subjecting the polycrystalline diamond to elemental analysis by SEM-EDX, that the pixels derived from the dark field are derived from diamond particles and non-diamond carbon.

Next, an X-ray spectrum of the cross section of the polycrystalline diamond is obtained with an X-ray diffractometer ("MiniFlex600" (trade name) available from Rigaku Corporation). At this time, the conditions of the X-ray diffractometer are as follows.

Characteristic X-ray: Cu-K$\alpha$ (wavelength: 1.54 Å)
Tube voltage: 45 kV
Tube current: 40 mA
Filter: Multilayer mirror
Optical system: concentration method
X-ray diffraction method: $\theta$-$2\theta$ method.

For the obtained X-ray spectrum, the following peak intensity A and peak intensity B are measured.

Peak intensity A: the peak intensity of the non-diamond carbon after subtracting the background intensity from the peak intensity near the diffraction angle $2\theta = 28.5°$.

Peak intensity B: the peak intensity of the diamond particles after subtracting the background intensity from the peak intensity near the diffraction angle $2\theta = 43.9°$.

The content (% by volume) of the diamond particles is determined by calculating the value of {peak intensity B/(peak intensity A + peak intensity B)} $\times$ {the sum (% by volume) of the content of the diamond particles and the content of the non-diamond carbon determined by the above SEM-EDX}. Since the non-diamond carbon and the diamond particles all are weighted electronically to the same degree, the X-ray peak intensity ratio can be taken as the volume ratio in the polycrystalline diamond. No peak derived from boron is detected by the present method. Therefore, even if the polycrystalline diamond contains boron, the content of the diamond particles may be sometimes 100% by volume.

(Median Diameter d50 of Diamond Particle)

The median diameter d50 of the diamond particles is 10 nm or more and 200 nm or less, and preferably 10 nm or more and 100 nm or less. The median diameter d50 of the diamond particles of 10 nm or more produces a polycrystalline diamond having an excellent strength. The median diameter d50 of the diamond particles of 200 nm or less produces a polycrystalline diamond having an excellent hardness.

In the present embodiment, the median diameter d50 of the diamond particles means a value determined by measuring the median diameter d50 of each of a plurality of diamond particles in each of the arbitrarily selected five measurement fields of view and calculating the average value of these measured median diameters. A specific method is as follows.

First, a polycrystalline diamond is cut at an arbitrary position to prepare a sample including a cross section of the polycrystalline diamond. The cross section can be prepared with a focused ion beam device, a cross-section polisher device or the like. Then, the cross section is observed with an SEM to acquire a backscattered electron image. The magnification at the time of observing the cross section with the SEM is appropriately adjusted so that the number of diamond particles observed in the measurement field of view is 100 or more. For example, the magnification at the time of observing the cross section with the SEM may be 10,000 times.

For each of the five SEM images, the equivalent circle diameter of each diamond particle is calculated with an image analysis software ("Win ROOF ver. 7.4.5", "WinROOF2018" or the like available from MITANI CORPORATION), with the grain boundary of the diamond particle observed within the measurement field of view separated. At this time, the diamond particles partly out of the measurement field of view are not counted.

The median diameter d50 in each measurement field of view is calculated from the distribution of the calculated equivalent circle diameter of each diamond particle, and the average value thereof is calculated. The average value corresponds to the median diameter d50 of the diamond particles.

The present inventors have confirmed that as long as the median diameter d50 of the diamond particles is measured in the same sample, little variation is observed in the measurement results even if the selected measurement field of view in the polycrystalline diamond is changed and calculations are performed multiple times. Accordingly, the inventors have believed that even if the measurement field of view is set arbitrarily, it is not arbitrary.

(Particle Diameter d90 of Diamond Particles)

In the present embodiment, the particle diameter d90 of the diamond particles is 15 nm or more and 300 nm or less, and preferably 15 nm or more and 150 nm or less. The particle diameter d90 of the diamond particles of 15 nm or more produces a polycrystalline diamond having an excellent strength. The particle diameter d90 of the diamond particles of 150 nm or less produces a polycrystalline diamond having an excellent hardness.

In the present embodiment, the particle diameter d90 of the diamond particles means a value determined by measuring the particle diameter d90 of each of a plurality of diamond particles in each of the arbitrarily selected five measurement fields of view and calculating the average value of these measured particle diameters d90. A specific method is the same as the method for determining the median diameter d50 described above.

(Dislocation Density of Diamond Particles)

The dislocation density of the diamond particles is $0.1 \times 10^{15}$ m$^{-2}$ or more and less than $2.0 \times 10^{15}$ m$^{-2}$, and preferably $0.5 \times 10^{15}$ m$^{-2}$ or more and $1.0 \times 10^{15}$ m$^{-2}$ or less. The dislocation density of the diamond particles of $0.1 \times 10^{15}$ m$^{-2}$ or more produces a polycrystalline diamond having an excellent strength. The dislocation density of the diamond particles of less than $2.0 \times 10^{15}$ m$^{-2}$ produces a polycrystalline diamond having an excellent thermal conductivity.

No attention has conventionally been focused to the correlation, in a polycrystalline diamond containing no binder phase, between the dislocation density of the diamond particles and the physical properties of the polycrystalline diamond. Accordingly, the present inventors have focused attention to the correlation therebetween, and have made diligent research on the relationship between the dislocation density of the diamond particles in the polycrystalline diamond and the thermal conductivity of the polycrystalline diamond. As a result, it has been found for the first time that lowering the dislocation density of the diamond particles compared to conventional polycrystalline diamond improves the thermal conductivity. When such a polycrystalline diamond having an excellent thermal conductivity is used for tools such as cutting tools, even at the time of performing high-speed machining wherein a cutting edge becomes hot, an excellent wear resistance can be exhibited due to rapid diffusion of the heat accumulated on the cutting edge. It has been revealed from this research that diamond particles in the conventional polycrystalline diamond (such as the polycrystalline diamond described in PTL 1) have a dislocation density of $5 \times 10^{16}$ m$^{-2}$ or more and $8 \times 10^{16}$ m$^{-2}$ or less.

The dislocation density of the polycrystalline diamond in the present specification is measured at a large synchrotron radiation facility (such as Kyushu Synchrotron Light Research Center (Saga Prefecture)). Specifically, it is measured by the following method.

A test specimen composed of a polycrystalline diamond is prepared. The size of the test specimen is 2 mm × 2 mm on the observation surface and 1.0 mm in thickness. The observation surface of the test specimen is mirror polished using a diamond slurry having an average particle diameter of 3 $\mu$m.

The test specimen is subjected to X-ray diffraction measurement under the following conditions, and the line profile of the diffraction peak from each of the orientation planes of (111), (220), (311), (331), (422), (440) and (531), which are the major orientations of diamond, is obtained.

(Measurement conditions for X-ray diffraction)

X-ray source: synchrotron radiation
Device conditions: detector NaI (fluorescence is cut by an appropriate ROI.)

Energy: 18 keV (wavelength: 0.6888 Å)
Dispersive crystal: Si (111)
Incident slit: 3 mm in width × 0.5 mm in height
Light-receiving slit: double slit (3 mm in width × 0.5 mm in height)
Mirror: platinum-coated mirror
Incident angle: 2.5 mrad
Scanning method: 2θ-θ scan
Peaks to be measured: 7 peaks of diamond: (111), (220), (311), (331), (422), (440) and (531). However, if profile acquisition is difficult due to texture, orientation or the like, the peak of the plane index is excluded.
Measurement conditions: 9 or more measurement points in the full width at half maximum corresponding to each measurement peak. The peak top intensity is set to 2,000 counts or more. Since the tail of the peak is also used for analysis, the measurement range is set to about 10 times the full width at half maximum.

The line profile obtained by the above X-ray diffraction measurement has a shape that includes both a true broadening attributed to physical quantities such as non-uniform strain of the test specimen and a broadening attributed to the device. In order to determine the non-uniform strain and crystallite size, a true line profile is obtained by removing the component attributed to the device from the measured line profile. The true line profile is obtained by fitting the obtained line profile and the line profile attributed to the device with a pseudo-Voigt function and subtracting the line profile attributed to the device. $LaB_6$ is used as a reference sample for removing the broadening of the diffraction line attributed to the device. When highly collimated synchrotron radiation is used, the broadening of the diffraction line attributed to the device may be taken as zero.

The dislocation density is determined by analyzing the obtained true line profile using the modified Williamson-Hall method and the modified Warren-Averbach method. The modified Williamson-Hall method and the modified Warren-Averbach method are known line profile analysis methods that have been used to determine the dislocation density.

The modified Williamson-Hall method is represented by the following expression (I):

[Expression 1]

$$\Delta K = \frac{0.9}{D} + \left(\frac{\pi M^2 b^2}{2}\right)^{1/2} \rho^{1/2} K C^{1/2} + O(K^2 C) \qquad (I)$$

wherein:

$\Delta K$ represents a half width of a line profile; D represents a crystallite size; M represents an arrangement parameter; b represents a Burgers vector. $\rho$ represents the dislocation density; K represents a scattering vector; $O(K^2C)$ represents a higher-order term of $K^2C$; and C represents the average value of contrast factors.

C in the above expression (I) is represented by the following expression (II):

$$C = C_{h00}[1 - q(h^2k^2 + h^2l^2 + k^2l^2)/(h^2 + k^2 + l^2)^2] \qquad (II)$$

In the above expression (II), a contrast factor $C_{h00}$ for each of screw dislocation and edge dislocation and a coefficient q for each contrast factor are calculated by using the computing code ANIZC with a slip system of <110> {111} and elastic stiffness $C_{11}$, $C_{12}$ and $C_{44}$ of 1076 GPa, 125 GPa and 576 GPa, respectively. In the expression (II) above, h, k and l correspond to the Miller index (hkl) of diamond. The contrast factor $C_{h00}$ is 0.183 for screw dislocation and 0.204 for edge dislocation. The coefficient q for the contrast factor is 1.35 for screw dislocation and 0.30 for edge dislocation. The screw dislocation ratio is fixed at 0.5, and the edge dislocation ratio is fixed at 0.5.

Further, the relationship represented by the following expression (III) holds between the dislocation and the non-uniform strain using the contrast factor C:

$$<\varepsilon(L)^2> = (\rho C b^2/4\pi) \ln (R_e/L) \qquad (III)$$

wherein: $R_e$ represents an effective radius of dislocation; and $\varepsilon(L)$ represents non-uniform strain.

From the relationship of the above expression (III) and the Warren-Averbach expression, the following expression (IV) can be presented, and the dislocation density $\rho$ and the crystallite size can be determined by the modified Warren-Averbach method.

$$\ln A(L) = \ln A^S(L) - (\pi L^2 \rho b^2/2) \ln (R_e/L)(K^2C) + O(K^2C)^2 \qquad \text{(IV)}$$

wherein: A(L) represents a Fourier series; $A^S(L)$ represents a Fourier series for crystallite size; and L indicates a Fourier length.

Details of the modified Williamson-Hall method and the modified Warren-Averbach method are described in: T. Ungar and A. Borbely, "The effect of dislocation contrast on x-ray line broadening: A new approach to line profile analysis", Appl. Phys. Lett., vol. 69, no. 21, p. 3173, 1996; and T. Ungar, S. Ott, P. Sanders, A. Borbely, J. Weertman, "Dislocations, grain size and planar faults in nanostructured copper determined by high resolution X-ray diffraction and a new procedure of peak profile analysis", Acta Mater., vol. 46, no. 10, pp. 3693 - 3699, 1998.

The present inventors have confirmed that as long as the dislocation density of the diamond particles is measured in the same sample, little variation is observed in the measurement results even if the selected measurement field of view is changed and calculations are performed multiple times. Accordingly, the inventors have believed that even if the measurement field of view is set arbitrarily, it is not arbitrary.

<Boron>

In the present embodiment, the polycrystalline diamond further comprises boron, wherein the content of boron is preferably 0.01% by mass or more and 1% by mass or less, and more preferably 0.05% by mass or more and 0.6% by mass or less, based on the total mass of the polycrystalline diamond. By defining the polycrystalline diamond in such a manner, the polycrystalline diamond has slidability and electrical conductivity. The content of boron in the polycrystalline diamond can be measured by secondary ion mass spectrometry (SIMS) as described above.

In one aspect of the present embodiment, in the polycrystalline diamond, the content of at least one metal element selected from the group consisting of a Group 4 element, a Group 5 element and a Group 6 element in the periodic table, and iron, aluminum, silicon, cobalt and nickel is preferably less than 1% by volume, and more preferably 0% by volume or more and 0.1% by volume or less. When two or more metal elements are contained, "the content of metal elements" is the total content of the two or more metal elements. The content of the metal elements can be confirmed by subjecting the polycrystalline diamond to structure observation, elemental analysis or the like with EDX equipped with SEM.

Examples of the Group 4 element in the periodic table include titanium (Ti), zirconium (Zr) and hafnium (Hf). Examples of the Group 5 element in the periodic table include vanadium (V), niobium (Nb) and tantalum (Ta). Examples of the Group 6 element in the periodic table include chromium (Cr), molybdenum (Mo) and tungsten (W).

<Knoop Hardness>

The polycrystalline diamond of the present embodiment preferably has a Knoop hardness at room temperature of 80 GPa or more and more preferably 100 GPa or more. There is no upper limit to the Knoop hardness, but it may be 150 GPa or less from the viewpoint of manufacturing. The Knoop hardness is determined by a Knoop hardness test that is performed under the conditions specified in JIS Z 2251:2009.

The Knoop hardness test specified in JIS Z 2251:2009 is known as one of methods for measuring the hardness of industrial materials. The Knoop hardness test is a test that determines the hardness of a material to be measured by pressing a Knoop indenter into the material to be measured at a predetermined temperature with a predetermined load (test load). In the present embodiment, the predetermined temperature is room temperature (23°C $\pm$ 5°C), and the predetermined load is 4.9 N. The Knoop indenter is a diamond indenter having a square pyramid shape with a rhombic base.

<<Tool>>

The polycrystalline diamond of the present embodiment can be suitably used for cutting tools, wear-resistant tools, grinding tools, tools for friction stir welding, styluses and the like, because it has excellent thermal conductivity and hardness. That is, the tool of the present embodiment comprises the polycrystalline diamond. The tool has an excellent wear resistance during high-speed machining of various materials. When the tool is a cutting tool, the cutting tool is particularly suitable for turning cemented carbide, ceramics and the like.

The tool may be entirely composed of the polycrystalline diamond, or only a part of the tool (for example, in the case of a cutting tool, the cutting edge part) may be composed of the polycrystalline diamond.

Examples of the cutting tool include a drill, an end mill, an indexable cutting insert for drills, an indexable cutting insert for end mills, an indexable cutting insert for milling, an indexable cutting insert for turning, a metal saw, a gear cutting tool, a reamer, a tap and cutting bit.

Examples of the wear-resistant tool include a die, a scriber, a scribing wheel and a dresser.

Examples of the grinding tool include an abrasive wheel.

<<Method for Manufacturing Polycrystalline Diamond>>

The method for manufacturing a polycrystalline diamond according to the present embodiment comprises:

preparing a non-diamond carbon material as a starting material (first step);
increasing the pressure and temperature from the starting pressure and starting temperature so as to pass through the graphite stable region (second step);
maintaining the pressure and temperature near the phase boundary for 10 minutes or more and 60 minutes or less when the pressure is increased to cross the diamond region (third step);
further increasing the pressure and temperature to the sintering pressure and sintering temperature to convert the non-diamond carbon material into diamond particles and sinter them at the sintering pressure and sintering temperature (fourth step).

<First Step: Preparing Non-diamond Carbon Material>

In this step, a non-diamond carbon material is prepared as a starting material. The non-diamond carbon material is not limited as long as it is a carbon material. The non-diamond carbon material preferably comprises low crystalline graphite, pyrolytic graphite or amorphous carbon. These may be used alone or in combination of two or more.

The non-diamond carbon material preferably has a purity of 99% by volume or more, more preferably 99.5% by volume or more, even more preferably 99.9% by volume or more, and most preferably 100% by volume. In other words, the non-diamond carbon material has preferably no iron group element metal, which is an impurity, from the viewpoint of suppressing the growth of crystalline grains.

Examples of the iron group element metal include iron (Fe), cobalt (Co) and nickel (Ni).

The non-diamond carbon material preferably has low concentrations of impurities such as hydrogen, oxygen and nitrogen, from the viewpoint of suppressing the growth of crystalline grains and promoting the direct conversion of the non-diamond carbon material to diamond. The concentration of each of hydrogen, oxygen and nitrogen in the non-diamond carbon material is preferably 0.1% by volume or less and more preferably 0.01% by volume or less. Further, the total impurity concentration in the non-diamond carbon material is preferably 0.3% by volume or less and more preferably 0.1% by volume or less.

The concentration of each of the impurities in non-diamond carbon material can be measured by secondary ion mass spectrometry (SIMS). As an example of this measurement method, the impurity concentration is measured using "CAMECA IMS-7f" (available from Ametech Inc.) as a device, with a primary ion species of $Cs^+$, a primary acceleration voltage of 15.0 kV and a detection area of $\varphi$ 30 $\mu$m.

<Second Step: Increasing Pressure and Temperature so as to Pass Through Graphite Stable Region>

In this step, the pressure and temperature are increased from the starting pressure and starting temperature so as to pass through the graphite stable region. As used herein, the term "graphite stable region" means a region, in which graphite is thermodynamically stable, in the phase equilibrium diagram of carbon (Fig. 1). Specifically, the graphite stable region is a region that satisfies the following formula (1):

$$P \leq 0.00286\,T + 1.4185 \qquad (1)$$

wherein T (°C) is a temperature and P (GPa) is a pressure.

The dislocation density of the finally obtained polycrystalline diamond is lower by a combination of increasing the pressure and temperature from the starting pressure and starting temperature so as to pass through the graphite stable region and maintaining the pressure and temperature near the phase boundary as described later.

In the present embodiment, the starting temperature is a normal temperature (23 ± 5°C) and the starting pressure is the atmospheric pressure (1013.25 hPa).

<Third Step: Maintaining Pressure and Temperature near Phase Boundary>

In this step, the pressure and temperature are maintained near the phase boundary for 10 minutes or more and 60 minutes or less when the pressure is increased to cross the diamond region. As used herein, the term "diamond region" means a region, in which diamond is thermodynamically stable, in the phase equilibrium diagram of carbon (Fig. 1). Specifically, the diamond region is a region in which the relationship represented by the following formula (2) holds between the pressure P (unit: GPa) and temperature T (unit: °C):

$$P > T \times 0.00286 + 1.4185 \qquad (2)$$

As used herein, the term "phase boundary" means a boundary between the graphite stable region described above and the diamond region. The dislocation density of the polycrystalline diamond is decreased by maintaining the pressure and temperature near the phase boundary, so that the resulting polycrystalline diamond is improved in thermal conductivity.

The pressure near the phase boundary is preferably 1.5 GPa or more and 8 GPa or less, and more preferably 2 GPa or more and 7 GPa or less. Here, the relationship represented by the following expression holds between the pressure P (unit: GPa) and the temperature T (unit: °C) at the phase boundary:

$$P = T \times 0.00286 + 1.4185$$

The temperature near the phase boundary is preferably 25°C or more and 2,300°C or less, and more preferably 100°C or more and 2,000°C or less.

In one aspect of the present embodiment, the pressure P near the phase boundary is 2 GPa or more and 3 GPa or less, and the temperature T near the phase boundary is 300°C or more and 500°C or less. The pressure P and the temperature T preferably satisfy the relationship represented by the above expression.

The time for which the pressure and temperature are maintained near the phase boundary is preferably 10 minutes or more, and more preferably 20 minutes or more. The upper limit of the time for which the pressure and temperature are maintained near the phase boundary is preferably 60 minutes or less, from the viewpoint of manufacturing (such as the cycle time of production).

<Fourth Step: Converting into Diamond Particles and Sintering Them>

In this step, the pressure and temperature are further increased to the sintering pressure and sintering temperature to convert the non-diamond carbon material into diamond particles and sinter them at the sintering pressure and sintering temperature.

The sintering pressure is preferably 12 GPa or more, and more preferably 15 GPa or more. The upper limit of the sintering pressure is preferably 25 GPa or less from the viewpoint of manufacturing.

The sintering temperature is preferably 1,800°C or more and 2,800°C or less, and more preferably 2,000°C or more and 2,600°C or less.

The sintering time at the sintering pressure and the sintering temperature is preferably 1 minute or more and 20 minutes or less, more preferably 5 minutes or more and 20 minutes or less, and even more preferably 10 minutes or more and 20 minutes or less.

The high-pressure and high-temperature generator to be used in the method for manufacturing a polycrystalline diamond of the present embodiment is not limited as long as it is a device that provides the pressure and temperature conditions at which the diamond phase is a thermodynamically stable phase. However, the generator is preferably a high-pressure and high-temperature generator or a multi-anvil type high-pressure and high-temperature generator from the viewpoint of improving productivity and workability. The vessel for containing the non-diamond carbon material as a raw material is not limited as long as it is made from a material that is resistant to high pressures and high temperatures. For example, the material to be used is suitably Ta, Nb or the like.

In order to prevent contamination of impurities into the polycrystalline diamond, for example, the non-diamond carbon material as a raw material is first placed in a capsule made of a metal having a high melting point such as Ta or Nb, heated in a vacuum and sealed to remove adsorbed gases and air from the non-diamond carbon material. Thereafter, the second to fourth steps are preferably performed.

EXAMPLES

The present embodiments will be more specifically described with reference to Examples. However, the present embodiments are not limited by these Examples.

<<Preparation of Polycrystalline Diamond>>

<First Step: Preparing Non-diamond Carbon Material>

For each of Samples 1 to 11, the following non-diamond carbon material was first prepared as a raw material.

Non-diamond carbon material

Samples 1 to 5 and 8 to 10: graphite powder having a particle diameter of 3 $\mu$m
Samples 6, 7 and 11: powder obtained by adding boron to graphite powder having a particle diameter of 3 $\mu$m

<Second Step: Increasing Pressure and Temperature so as to Pass Through Graphite Stable Region>

Next, the non-diamond carbon material was placed in a Ta capsule, heated in a vacuum, and sealed. Thereafter, the pressure and the temperature was increased from the starting pressure and starting temperature shown in Table 1 to the end-point pressure and the end-point temperature in the first stage shown in Table 1 with using a high-pressure and high-temperature generator. The starting pressure in Table 1, which is written as "0 GPa", means the atmospheric pressure. The end-point pressure and end-point temperature in the first stage correspond to the graphite stable region as described above.

<Third Step: Maintaining Pressure and Temperature near Phase Boundary>

The pressure was increased from the first stage to reach the end-point pressure and end-point temperature in the second stage shown in Table 1, which was maintained for the holding time in the second stage shown in Table 1. Herein, the end-point pressure and the end-point temperature in the second stage correspond to the pressure P (unit: GPa) and temperature T (unit: °C) near the phase boundary described above, respectively, and the relationship represented by the following expression holds.

$$P = T \times 0.00286 + 1.4185$$

<Fourth Step: Converting into Diamond Particles and Sintering Them>

After performing the third step, the temperature and pressure were increased via the end-point pressure and end-point temperature in the third stage shown in Table 1 to the sintering pressure and sintering temperature of the fourth stage. The non-diamond carbon material was converted into diamond particles and sintered by pressurizing and heating it for the sintering time of the fourth stage shown in Table 1. Polycrystalline diamonds of Samples 1 to 11 were obtained by the above procedure. Neither sintering aid nor binder material was added to the non-diamond carbon material. As Sample 12, a commercially available sintered diamond (trade name: DA1000, available from SUMITOMO ELECTRIC HARDMETAL CORP.) was prepared. Samples 1 to 7 correspond to the "inventive" Examples. Samples 8 to 12 correspond to the Comparative Examples. For the sintered diamond, the median diameter d50 of the diamond particles is 0.5$\mu$m, and the content of the diamond particles is 90 to 95% by volume. Cobalt was used as a binder material in the sintered diamond.

[Table 1]

| Sample | Second step | | | | | Third step | | | Fourth step | | | | | |
| | Starting point | | First stage | | | Second stage | | | Third stage | | | Fourth stage | | |
| | Starting temperature | Starting pressure | End-point temperature | End-point pressure | Holding time | End-point temperature | End-point pressure | Holding time | End-point temperature | End-point pressure | Holding time | Sintering temperature | Sintering pressure | Sintering time |
| | °C | GPa | °C | GPa | minute | °C | GPa | minute | °C | GPa | minute | °C | GPa | minute |
| 1 | 25 | 0 | 300 | 0 | 0 | 300 | 2.28 | 10 | 300 | 16 | 0 | 2300 | 16 | 20 |
| 2 | 25 | 0 | 300 | 0 | 0 | 300 | 2.28 | 10 | 300 | 15 | 0 | 2100 | 15 | 20 |
| 3 | 25 | 0 | 300 | 0 | 0 | 300 | 2.28 | 10 | 300 | 13 | 0 | 2600 | 13 | 20 |
| 4 | 25 | 0 | 500 | 0 | 0 | 500 | 2.85 | 10 | 500 | 16 | 0 | 2300 | 16 | 20 |
| 5 | 25 | 0 | 500 | 0 | 0 | 500 | 2.85 | 20 | 500 | 16 | 0 | 2300 | 16 | 20 |
| 6 | 25 | 0 | 300 | 0 | 0 | 300 | 2.28 | 10 | 300 | 16 | 0 | 2300 | 16 | 20 |
| 7 | 25 | 0 | 300 | 0 | 0 | 300 | 2.28 | 10 | 300 | 16 | 0 | 2300 | 16 | 20 |
| 8 | 25 | 0 | 300 | 0 | 0 | 300 | 228 | 0 | 300 | 16 | 0 | 2300 | 16 | 20 |
| 9 | 25 | 0 | 25 | 3 | 0 | 1000 | 3 | 10 | 1000 | 14 | 0 | 2500 | 14 | 20 |
| 10 | 25 | 0 | 300 | 0 | 0 | 300 | 2.28 | 10 | 300 | 13 | 0 | 2250 | 13 | 20 |
| 11 | 25 | 0 | 300 | 0 | 0 | 300 | 2.28 | 10 | 300 | 16 | 0 | 2800 | 16 | 20 |
| 12 | - | - | - | - | - | - | - | - | - | - | - | - | - | - |

EP 4 353 678 A1

«Characterization of Polycrystalline Diamond»

For the obtained polycrystalline diamond, the contents of diamond particles and boron, the content of metal elements, the content of inevitable impurities, the median diameter d50 and particle diameter d90 of the diamond particles, the dislocation density of the diamond particles, the resistivity of the diamond particles and the Knoop hardness of the diamond particles were measured as shown below.

<Contents of Diamond Particles and Boron>

The content of the diamond particles in the polycrystalline diamond was identified by using a combination of both of a method using an EDX equipped with an SEM and an X-ray diffraction method. The content of boron in the polycrystalline diamond was identified by SIMS. The specific measurement method is the same as the method described in the above section [Details of Embodiment of the Present Disclosure], and the description thereof will not therefore be repeated. The results are shown in Table 2 (see columns "Content of diamond" and "Boron content"). For each of Samples 2 and 3, it was confirmed that the remainder was unconverted graphite.

<Content of Metal Elements (Content of Iron Group Elements>

The content of iron group elements in each of the polycrystalline diamond and sintered diamond was identified by an EDX equipped with SEM. Specific measurement conditions are as follows. The results are shown in Table 2 (see the column "Content of iron group elements Fe, Co and Ni").

Conditions for EDX
acceleration voltage 15 kV

<Content of Inevitable Impurities>

The content of inevitable impurities in the polycrystalline diamond was identified by SIMS. The specific measurement method is the same as the method described in the above section [Details of Embodiment of the Present Disclosure], and the description thereof will not therefore be repeated. The results are shown in Table 2 (see the column "Content of inevitable impurities").

<Median Diameter d50 and Particle Diameter d90 of Diamond Particles>

The median diameter d50 and particle diameter d90 of diamond particles contained in each polycrystalline diamond were measured. The specific measurement method is the same as the method described in the above section [Details of Embodiment of the Present Disclosure], and the description thereof will not therefore be repeated. The results are shown in Table 2 (see the columns "Median diameter d50" and "Particle diameter d90").

<Dislocation Density of Diamond Particles>

The dislocation density of diamond particles in a polycrystalline diamond was measured. The specific measurement method is the same as the method described in the above section [Details of Embodiment of the Present Disclosure], and the description thereof will not therefore be repeated. The results are shown in Table 2 (see the column "Dislocation density").

<Resistivity of Diamond Particles>

The resistivity of diamond particles in the polycrystalline diamond was measured by the four-probe method in accordance with JIS standard JIS K 7194. At this time, the sample size was $\varphi\, 5 \times 1$ mm. The results are shown in Table 2 (see the column "Resistivity"). In Table 2, "-" means that the measurement was not able to be performed because the polycrystalline diamond was an insulating material.

(Knoop Hardness of Diamond Particles)

The Knoop hardness was measured for the polycrystalline diamond and the sintered diamond. The specific measurement method is the same as the method described in the above section [Details of Embodiment of the Present Disclosure], and the description thereof will not therefore be repeated. The results are shown in Table 2 (see the column "Knoop hardness").

<<Evaluation of Tool Comprising Polycrystalline Diamond>>

<Cutting Test>

In order to investigate the wear resistance of a cutting tool comprising the polycrystalline diamond of each of Samples 1 to 11 or the sintered diamond of Sample 12, an insert for turning (tool shape: DNMA150404RH) was prepared using the polycrystalline diamond or the sintered diamond and subjected to cutting under the following cutting conditions, and the wear amount when the cutting distance reached 1,500 m was calculated. The ratio of wear amount was calculated with respect to the wear amount of Sample 1. The results are shown in Table 2. Performing high-speed cutting at a cutting speed of 300 m/min is believed to result in a high temperature at the cutting edge of the cutting tool. Therefore, each Sample can be evaluated as having excellent thermal conductivity and wear resistance, during cutting in which the smaller ratio of wear amount results in a higher temperature at the cutting edge.

(Cutting Conditions)

Material to be cut: alumina (purity: 99%)
Cutting speed: 300 m/min
Feed amount: 0.03 mm/rev
Cutting depth: 0.01 mm
Coolant: Wet

[Table 2]

| Sample | Diamond content | Boron content | Content of iron group elements Fe, Co and Ni | Content of inevitable impurities | Median diameter d50 | Particle diameter d90 | Dislocation density | Resistivity | Knoop hardness | Cutting evaluation Ratio of wear amount (based on Sample 1) |
|---|---|---|---|---|---|---|---|---|---|---|
| | % by volume | % by mass | % by volume | % by volume | nm | nm | ×10$^{15}$/m$^2$ | mΩ·cm | GPa | |
| 1 | 100 | 0 | 0 | 0.01 | 59 | 83 | 0.7 | - | 125 | 1 |
| 2 | 99.1 | 0 | 0 | 0.02 | 43 | 60 | 1.5 | - | 110 | 1.13 |
| 3 | 99.5 | 0 | 0 | 0.01 | 130 | 195 | 0.4 | - | 110 | 1.1 |
| 4 | 100 | 0 | 0 | 0.01 | 58 | 84 | 0.6 | - | 131 | 0.98 |
| 5 | 100 | 0 | 0 | 0.01 | 61 | 80 | 0.5 | - | 128 | 0.97 |
| 6 | 100 | 0.01 | 0 | 0.02 | 59 | 81 | 0.7 | - | 125 | 0.93 |
| 7 | 100 | 1 | 0 | 0.01 | 59 | 80 | 0.7 | 1 | 115 | 0.92 |
| 8 | 100 | 0 | 0 | 0.01 | 61 | 83 | 2.1 | - | 123 | 1.3 |
| 9 | 99.8 | 0 | 0 | 0.01 | 88 | 123 | 2.3 | - | 118 | 1.36 |
| 10 | 98 | 0 | 0 | 0.01 | 49 | 69 | 0.6 | - | 98 | 1.8 |
| 11 | 100 | 1.3 | 0 | 0.01 | 205 | 280 | 0.7 | 0.7 | 95 | 19 |
| 12 | 93 | 0 | 7 | not measured | 500 | 700 | 12 | not measured | 55 | 3.5* |

* The value at a cutting distance of 300 m (The wear amount was large, and the cutting was thereby stopped at a cutting distance of 300 m.)

<<Results>>

It was shown from the results in Table 2 that Samples 1 to 7 (Examples) had a ratio of wear amount of 0.92 to 1.13 and therefore had excellent thermal conductivity and wear resistance. In contrast, Samples 8 to 11 (Comparative Examples) had a ratio of wear amount of 1.3 to 1.9. For Sample 12 (Comparative Example), the wear amount was large when the cutting distance reached 300 m, and the subsequent cutting test was thereby discontinued. It was shown from the above results that the cutting tools according to Examples had excellent thermal conductivity and wear resistance. It was also shown that the polycrystalline diamond used in the cutting tools according to Examples had excellent thermal conductivity.

Although the present embodiments and examples of the present disclosure have been described as above, the features of the above-described embodiments and examples are contemplated from the beginning to be appropriately combined or variously modified.

The embodiments and examples disclosed herein should be understood as exemplary and not as restrictive in all respects. The scope of the present invention is defined by the claims rather than the above description, and is intended to include the meanings equivalent to the claims and all modifications within the scope of the claims.

**Claims**

1. A polycrystalline diamond comprising diamond particles, wherein:

   a content of the diamond particles is more than 99% by volume based on the total volume of the polycrystalline diamond;
   a median diameter d50 of the diamond particles is 10 nm or more and 200 nm or less; and
   a dislocation density of the diamond particles is $0.1 \times 10^{15}$ m$^{-2}$ or more and less than $2.0 \times 10^{15}$ m$^{-2}$.

2. The polycrystalline diamond according to claim 1, wherein the dislocation density of the diamond particles is $0.1 \times 10^{15}$ m$^{-2}$ or more and $1.0 \times 10^{15}$ m$^{-2}$ or less.

3. The polycrystalline diamond according to claim 1 or 2, wherein the median diameter d50 of the diamond particles is 10 nm or more and 100 nm or less.

4. The polycrystalline diamond according to any one of claims 1 to 3, further comprising boron, wherein a content of the boron is 0.01% by mass or more and 1% by mass or less based on a total mass of the polycrystalline diamond.

5. The polycrystalline diamond according to any one of claims 1 to 4, which has a Knoop hardness at a normal temperature of 80 GPa or more.

6. The polycrystalline diamond according to any one of claims 1 to 5, wherein a content of at least one metal element selected from the group consisting of a Group 4 element, a Group 5 element and a Group 6 element in the periodic table, and iron, aluminum, silicon, cobalt and nickel is less than 1% by volume.

7. The polycrystalline diamond according to any one of claims 1 to 6, wherein a content of at least one inevitable impurity selected from the group consisting of hydrogen, oxygen, nitrogen, an alkali metal element and an alkaline earth metal element is less than 0.1% by volume.

8. A tool comprising the polycrystalline diamond according to any one of claims 1 to 7.

FIG.1

| | | | INTERNATIONAL SEARCH REPORT | | International application No. |
|---|---|---|---|---|---|

<div align="center">

**INTERNATIONAL SEARCH REPORT**

</div>

| International application No. |
|---|
| PCT/JP2021/022258 |

A. CLASSIFICATION OF SUBJECT MATTER
C01B 32/25(2017.01)i
FI: C01B32/25

According to International Patent Classification (IPC) or to both national classification and IPC

B. FIELDS SEARCHED

Minimum documentation searched (classification system followed by classification symbols)
C01B32/25

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus (STN); JSTPlus (JDreamIII); JST7580 (JDreamIII); JSTChina (JDreamIII)

C. DOCUMENTS CONSIDERED TO BE RELEVANT

| Category* | Citation of document, with indication, where appropriate, of the relevant passages | Relevant to claim No. |
|---|---|---|
| X<br>Y | PANTEA, C. et al. Dislocation density and graphitization of diamond crystals. PHYSICAL REVIEW B., 2002, vol. 66, 094106-1 to 094106-6, DOI:10.1103/PhysRevB.66.094106 ABSTRACT, II. EXPERIMENT, III. RESULTS | 1-3, 5-7<br>4, 5, 8 |
| Y | WO 2020/017039 A1 (SUMITOMO ELECTRIC INDUSTRIES) 23 January 2020 (2020-01-23) claims, examples | 5, 8 |
| Y | JP 2013-028500 A (SUMITOMO ELECTRIC IND LTD) 07 February 2013 (2013-02-07) examples | 4 |
| A | JP 5-194089 A (GENERAL ELECTRIC CO <GE>) 03 August 1993 (1993-08-03) entire text | 1-8 |

☒ Further documents are listed in the continuation of Box C.  ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 13 July 2021 (13.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT

| International application No. |
| --- |
| PCT/JP2021/022258 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | STEHL, C. et al. Efficiency of dislocation density reduction during heteroepitaxial growth of diamond for detector applications. APPLIED PHYSICS LETTERS., 2013, vol. 103, 151905-1 to 151905-4 entire text | 1-8 |
| A | JP 2017-154960 A (NICCA CHEMICAL CO) 07 September 2017 (2017-09-07) entire text | 1-8 |

Form PCT/ISA/210 (continuation of second sheet) (January 2015)

**INTERNATIONAL SEARCH REPORT**
Information on patent family members

International application No.

PCT/JP2021/022258

| Patent Documents referred in the Report | Publication Date | Patent Family | Publication Date |
|---|---|---|---|
| WO 2020/017039 A1 | 23 Jan. 2020 | CN 110933945 A<br>TW 202007644 A | |
| JP 2013-028500 A | 07 Feb. 2013 | US 2014/0186629 A1<br>examples<br>WO 2013/015348 A1<br>EP 2738140 A1<br>CN 103717530 A | |
| JP 5-194089 A | 03 Aug. 1993 | US 5540904 A<br>entire text<br>ZA 9204614 A<br>CA 2070436 A | |
| JP 2017-154960 A | 07 Sep. 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005065809 A

**Non-patent literature cited in the description**

- **H. SUMIYA et al.** *Japanese Journal of Applied Physics,* 2009, vol. 48, 120206
- **T. UNGAR ; A. BORBELY.** The effect of dislocation contrast on x-ray line broadening: A new approach to line profile analysis. *Appl. Phys. Lett.,* 1996, vol. 69 (21), 3173
- **T. UNGAR ; S. OTT ; P. SANDERS ; A. BORBELY ; J. WEERTMAN.** Dislocations, grain size and planar faults in nanostructured copper determined by high resolution X-ray diffraction and a new procedure of peak profile analysis. *Acta Mater.,* 1998, vol. 46 (10), 3693-3699